# EUROPÄISCHE PATENTSCHRIFT

(11) **EP 1 997 611 B1**
(45) Veröffentlichungstag und Bekanntmachung des Hinweises auf die Patenterteilung: **25.05.2011**
(21) Anmeldenummer: 08152362.3
(22) Anmeldetag: 06.03.2008
(51) Int. Cl.: B29C 73/16, B60S 5/04

(54) **Reifenpannenhilfeset**
Flat tyre repair set
Kit d'assistance anti-crevaison

(30) Priorität: 29.05.2007 DE 102007024944
(43) Veröffentlichungstag der Anmeldung: 03.12.2008
(73) Patentinhaber: Continental Reifen Deutschland GmbH, 30165 Hannover (DE)
(72) Erfinder: Detering, Rainer, 30926 Seelze (DE); Ernst, Gerhard, 30629 Hannover (DE); Dumke, Michael, 17506 Gützkow (DE)
(74) Vertreter: Finger, Karsten

(56) Entgegenhaltungen:
- DE-A1- 10 314 075
- DE-U1-202006 016 087

## Beschreibung

Die Erfindung betrifft ein Reifenpannenhilfeset, insbesondere für Personen- oder Nutzkraftwagen, mit einem Abdichtmittel enthaltenen Abdichtmittelbehälter, einer, insbesondere zum Verbinden mit dem Abdichtmittelbehälter ausgebildeten, Druckluftquelle und einem Manometer. Gemäß einem zweiten Aspekt betrifft die Erfindung ein Verfahren zum Beheben eines Schadens an einem Reifen.

Derartige Reifenpannenhilfesets sind in sich abgeschlossene Anordnungen, die anstelle von Ersatzreifen in Personen- oder Nutzkraftwagen eingesetzt werden. Bei kleineren Löchern in einem Reifen des Personen- oder Nutzkraftwagens wird das Abdichtmittel in den kaputten Reifen gedrückt, wo es die Öffnung verschließt und den Reifen so vorläufig repariert.

Ein derartiges Reifenpannenhilfeset ist beispielsweise aus der DE 298 12 740 U1 bekannt. Reifenpannenhilfesets sind zudem aus der EP 1 372 941 B1 und der US 6,026,999 bekannt.

Die Offenlegungsschrift DE 103 14 075 A1 offenbart eine Vorrichtung gemäß dem Oberbegriff des Anspruchs 1 und ein Verfahren gemäß dem Oberbegriff des Anspruchs 13.

Nachteilig an bekannten Reifenpannenhilfesets ist, dass es regelmäßig zu Fehlbedienungen und Fehlfunktionen kommt. Die Ursache der Fehlfunktionen war bislang nicht bekannt. Eine sichere Funktion des Reifenpannenhilfesets ist jedoch wünschenswert, da ansonsten das betroffene Personen- oder Nutzfahrzeug unter hohem Aufwand abgeschleppt werden muss.

Der Erfindung liegt daher die Aufgabe zugrunde, ein bekanntes Reifenpannenhilfeset so weiterzubilden, dass Fehlbedienungen oder Fehlfunktionen vermindert werden.

Die Erfindung löst das Problem durch ein Reifenpannenhilfeset, bei dem das Manometer ein Kolbenmanometer ist, das einen in einem Zylinder laufenden Kolben umfasst.

Gemäß einem zweiten Aspekt löst die Erfindung das Problem durch ein Verfahren zum Beheben eines Schadens an einem Reifen mit den Schritten (a) Bereitstellen eines erfindungsgemäßen Reifenpannenhilfesets, (b) gegebenenfalls Anschließen des Dichtmittelbehälters einerseits an die Druckluftquelle und andererseits an ein Reifenventil des Reifens, (c) Einbringen von Dichtmittel aus dem Abdichtmittelbehälter in den Reifen, insbesondere mittels der Druckluftquelle, und anschließend (d) Kontrollieren eines Luftdrucks in dem Reifen mittels des Kolbenmanometers.

Vorteilhaft an der Erfindung ist, dass die Wahrscheinlichkeit von Fehlfunktionen deutlich reduziert ist. Es hat sich nämlich herausgestellt, dass die Ursache vieler der Fehlfunktionen in einem Manometerschaden begründet ist. Manometerschäden sind auf eine lang anhaltende Vibrationsbelastung zurückzuführen, der das Manometer während einer Lagerung in dem Personen- oder Nutzfahrzeug ausgesetzt ist. Besonders anfällig sind die im Moment standardmäßig verwendeten Rohrfedermanometer. Ein derartiger Manometerschaden fällt in der Regel nicht auf, da das Reifenpannenhilfeset von den Benutzern in der Regel nicht gewartet wird. Es hat sich herausgestellt, dass ein Kolbenmanometer deutlich weniger anfällig gegenüber einer Vibrationsbelastung ist und daher eine deutlich reduzierte Ausfallwahrscheinlichkeit besitzt. Durch die geringere Fehlerwahrscheinlichkeit des Kolbenmanometers kommt es zudem zu weniger Fehlbedienungen, die darauf zurückzuführen sind, dass der Bediener sich auf die Anzeige des defekten Manometers verlässt.

Es ist ein weiterer Vorteil des erfindungsgemäßen Reifenpannenhilfesets, dass das Kolbenmanometer weitgehend unempfindlich gegenüber Überdruck ist. Während des Reparierens des Reifens können Druckspitzen nicht vollständig ausgeschlossen werden.

Standardmäßig verwendete Rohrfedermanometer werden beschädigt, wenn sie bei einem Druck betrieben werden, der mehr als das 1,25-fache oberhalb des Messbereichs liegt (maximal zulässiger Überdruck). Um ein derartiges Überschreiten des maximal zulässigen Überdrucks zu verhindern, müssen Manometer und Kompressor so ausgelegt werden, dass Druckspitzen oberhalb des maximal zulässigen Überdrucks vermieden werden. Das führt zu einem erhöhten Aufwand bei der Konstruktion des Kompressors bzw. zu Manometern mit großem Messbereich, die wiederum relativ ungenau sind. Ein Kolbenmanometer ist hingegen gegenüber Druckspitzen weitgehend unempfindlich. Es kann daher einen auf die Verwendung für Kfz-Reifen wesentlichen Messbereich, zum Beispiel 0 bis 3,5 bar, aufweisen, wobei höhere Drücke seitens des Kompressors, insbesondere beim Einbringen des Abdichtmittels in den Reifen, keine Beschädigung hervorrufen. Ein erfindungsgemäßes Reifenpannenhilfeset ist daher universell für eine Vielzahl von Fahrzeugtypen einsetzbar und kann mit einer Vielzahl an Druckluftquellen betrieben werden. Durch Fehlbedienung entstehende Druckspitzen führen zu keiner Fehlfunktion.

Vorteilhaft ist zudem die einfache Fertigung eines erfindungsgemäßen Reifenpannenhilfesets. Da an die Messgenauigkeit des Manometers keine erhöhten Anforderungen gestellt werden müssen, kann das Kolbenmanometer beispielsweise kostengünstig aus Kunststoff in Form eines Spritzgussteils hergestellt werden.

Unter einem Kolbenmanometer wird im Rahmen der vorliegenden Beschreibung ein Manometer verstanden, bei dem der Kolben von einer Seite mit dem Volumen in Messkontakt steht, in dem der Druck zu bestimmen ist. Auf der anderen Seite besitzt das Kolbenmanometer eine Spannvorrichtung, wie beispielsweise eine Feder, die dem zu messenden Druck entgegenwirkt. Das Kolbenmanometer hat bevorzugt ein Verhältnis von zulässigem Überdruck zum Messbereich von mehr als 1,25 : 1.

In einer bevorzugten Ausführungsform ist die Druckquelle ein mit einem elektrischen Bordnetz des Personen- oder Nutzkraftwagens betreibbarer Kompressor, der insbesondere mit einer Gleichspannung mit 12 V bis 42 V betreibbar ist. Beispielsweise ist der Kompressor so ausgebildet, dass er mit einem Zigarettenanzünder des Personen- oder Nutzkraftwagens elektrisch und mechanisch koppelbar ist.

Um ein besonders kompaktes Reifenpannenhilfeset zu erhalten und einem Verlieren des Manometers vorzubeugen, ist in einer bevorzugten Ausführungsform vorgesehen, dass das Kolbenmanometer fest mit dem Kompressor verbunden und angeordnet ist, um abströmseitig hinter dem Kompressor einen Luftdruck von Druckluft zu messen. Eine besonders einfache Anordnung wird erhalten, wenn das Kolbenmanometer fest von außen oder von innen mit einem Kompressorgehäuse des Kompressors verbunden ist.

Alternativ ist es bevorzugt, das Kolbenmanometer an einem Druckschlauch zu befestigen, der zum Verbinden des Kompressors mit dem Reifenventil ausgebildet ist, wobei das Kolbenmanometer mit dem Druckschlauch in Messverbindung steht, um den Luftdruck in dem Druckschlauch zu messen.

Eine besonders leicht abzulesende Ausführungsform wird erhalten, wenn das Kolbenmanometer eine Messzunge besitzt, die in Abhängigkeit von dem am Kolbenmanometer anliegenden Luftdruck aus einem Manometergehäuse des Kolbenmanometers hinausragt. Beispielsweise kann vorgesehen sein, dass die Messzunge ausgebildet ist, um einen Maximaldruckschalter zu betätigen. Gemäß einer bevorzugten Ausführungsform ist der Maximaldruckschalter ein federbelastetes Überdruckventil, das ausgebildet ist, um dann, wenn es von der Messzunge betätigt wird, abströmseitig hinter dem Kompressor vorhandene Druckluft in eine Umgebung des Kompressors abzulassen. Dadurch wird sichergestellt, dass ein zu reparierender Reifen des Personen- oder Nutzkraftwagens zu keinem Zeitpunkt mit einem Druck beaufschlagt wird, der oberhalb eines voreingestellten Maximaldrucks liegt. Alternativ ist der Maximaldruckschalter Teil einer magnetischen oder elektrischen Überdruckschaltung.

Das Kolbenmanometer kann dadurch zu einem Maximaldruckanzeiger ausgebildet werden, dass die Messzunge nur bezüglich einer Bewegungsrichtung mit dem Kolben gekoppelt ist, so dass sich ihre Position relativ zu einer Druckskala bei einem Absinken des Luftdrucks nicht ändert.

Eine besonders robuste und gegen externen Schmutz geschützte Ausführungsform wird erhalten, wenn das Kolbenmanometer ein transparentes Manometergehäuse aufweist, auf das eine Druckskala aufgebracht ist. Die Stellung des Kolbens gestattet so die Ablesung des Luftdrucks. Es ist zudem möglich, dass das Kolbenmanometer eine von dem Kolben bewegbare Flüssigkeit aufweist, die auf die Druckanzeigevorrichtung, wie beispielsweise eine Skala, wirkt. Insbesondere in diesem Fall kann das Kolbenmanometer ein Gasvolumen aufweisen, das dem zu messenden Luftdruck entgegenwirkt. Auf diese Weise wird ein Manometer erhalten, bei dem eine Feder verzichtbar ist.

Es ist zudem möglich, dass das Kolbenmanometer einen an dem Manometergehäuse angeordneten Zeiger aufweist, der über ein Seil mit dem Kolben verbunden ist. Dazu kann eine Spannfeder vorgesehen sein, die das Seil vorspannt und so zum Verschieben des Zeigers für den Fall einer Änderung des zu messenden Luftdrucks ausgebildet ist.

Das Reifenpannenhilfeset ist besonders einfach zu bedienen, wenn das Kolbenmanometer eine farblich kodierte binäre Druckanzeige umfasst. Es kann eine Farbe, beispielsweise grün, vorgesehen sein, die einen Luftdruck kodiert, bei dem der Reifen sicher benutzbar ist. Eine andere Farbe, beispielsweise rot, signalisiert hingegen einen zu hohen oder zu niedrigen Luftdruck in dem Reifen.

Ein besonders einfach zu realisierender Überdruckschutz wird dadurch erhalten, dass das Manometergehäuse ein Loch aufweist, das so angeordnet ist, dass Druckluft aus dem Loch in die Umgebung entweicht, wenn der Luftdruck einen voreingestellten Wert überschreitet.

Um eine abschließende Kontrolle des Luftdrucks in dem Reifen zu erlauben, ist bevorzugt vorgesehen, dass das Kolbenmanometer gesondert mit einem Reifenventil des Reifens des Personen- oder Nutzkraftwagens in Messkontakt bringbar ist. Es hat sich überraschend als besonders vorteilhaft herausgestellt, wenn das Reifenpannenhilfeset als Druckmesser ausschließlich das Kolbenmanometer umfasst und das Kolbenmanometer ausschließlich mit dem Reifenventil des Reifens in Messkontakt bringbar ist. In diesem Fall ist sichergestellt, dass der Benutzer des Reifenpannenhilfesets nur dann den Luftdruck in dem defekten Reifen messen kann, wenn die Druckluftquelle von dem Reifen getrennt ist. Es wird so erreicht, dass der Benutzer nicht durch auftretende Druckspitzen, die bis zu 5 bar betragen können, zu der Annahme verleitet wird, der Kompressor sei defekt und es drohe ein Platzen des Reifens. Eine daraus resultierende Fehlbedienung wird vermieden.

Um ein Verlieren weitgehend auszuschließen, ist das Kolbenmanometer bevorzugt mit dem Kompressor durch Anklippsen verbindbar ausgebildet. Alternativ oder additiv kann das Kolbenmanometer auch an den Druckschlauch anklippsbar ausgebildet sein.

Reifenpannenhilfesets, bei denen das Abdichtmittel nicht druckluftunterstützt in den Reifen eingebracht werden, erfordern im Allgemeinen die Entfernung des Reifenventils aus dem Ventilschaft. Dies wird üblicherweise durch Verwendung eines handelsüblichen Ventilausdrehers, zum Beispiel in Verbindung mit der Ventilkappe erreicht. Günstig ist es, wenn in das Kolbenmanometer ein Ventilausdreher für das Reifenventil integriert ist, wenn also eine Vorrichtung vorgesehen ist, die zum Ausdrehen des Ventils aus dem Ventilschaft ausgebildet ist.

Ein erfindungsgemäßes Verfahren wird bevorzugt so durchgeführt, dass der Luftdruck in dem Reifen ausschließlich dann kontrolliert wird, wenn der Kompressor nicht mit dem Reifen verbunden ist.

Im Folgenden werden Ausführungsformen der Erfindung anhand der beigefügten Zeichnungen näher erläutert. Dabei zeigt
- Figur 1a: eine schematische Ansicht eines erfindungsgemäßen Reifenpannenhilfesets von der Seite,
- Figur 1b: das Reifenpannenhilfeset gemäß Figur 1a von oben,
- Figur 1c: eine schematische Ansicht einer alternativen Ausführungsform eines erfindungsgemäßen Reifenpannenhilfesets von der Seite,
- Figur 2a: einen schematischen Querschnitt durch ein Kolbenmanometer,
- Figur 2b: einen schematischen Querschnitt durch ein alternatives Kolbenmanometer,
- Figur 2c: einen schematischen Querschnitt durch ein weiteres alternatives Kolbenmanometer und
- Figur 3: ein mit einem Druckschlauch eines erfindungsgemäßen Reifenpannenhilfesets dauerhaft verbundenes Kolbenmanometer.

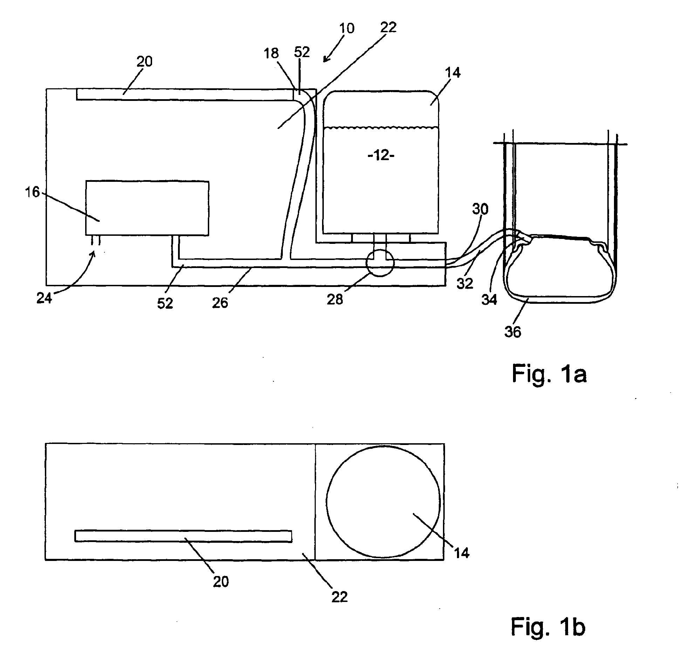

Figur 1a zeigt ein Reifenpannenhilfeset 10 mit einem ein Abdichtmittel 12 enthaltenden Abdichtmittelbehälter 14, einer Druckluftquelle 16 in Form eines Kompressors, und einem über einen flexiblen Schlauch 18 mit der Druckluftquelle 16 in Verbindung stehenden Kolbenmanometer 20. Die Druckluftquelle 16, der Schlauch 18 und das Kolbenmanometer 20 sind von einem Kompressorgehäuse 22 umgeben.

Figur 1b zeigt das Reifenpannenhilfeset 10 in einer Ansicht von oben. Es ist zu erkennen, dass das Kolbenmanometer 20 durch ein transparentes Fenster im Kompressorgehäuse 22 sichtbar angeordnet ist.

Der Kompressor 16 (Figur 1a) ist über eine nicht eingezeichnete elektrische Leitung mit einer Steckdose eines nicht eingezeichneten Personenkraftwagens verbindbar, die eine Gleichspannung von 12 V abgibt. Der Kompressor 16 besitzt einen Lufteinlass 24 zum Ansaugen von Umgebungsluft, die komprimiert über einen Druckluftauslass abgegeben wird. Über eine schematisch eingezeichnete Druckleitung 26 und ein 3-Wege-Ventil 28 steht der Kompressor 16 in Verbindung mit dem Abdichtmittelbehälter 14, um die Druckluft in diesen einzuleiten. Die Druckleitung 26 ist über eine nicht eingezeichnete Verbindung direkt mit dem Schlauch 18 verbunden, so dass das Kolbenmanometer 20 einen Luftdruck p der Druckluft abströmseitig hinter dem Kompressor 16 misst.

Über einen Auslass 30 des Reifenpannenhilfesets kann Abdichtmittel 12 und/oder Druckluft in einen Druckschlauch 32 abgegeben werden, der mit einem Reifenventil 34 eines Reifens 36 über einen Ventiladapter reversibel verbindbar ist.

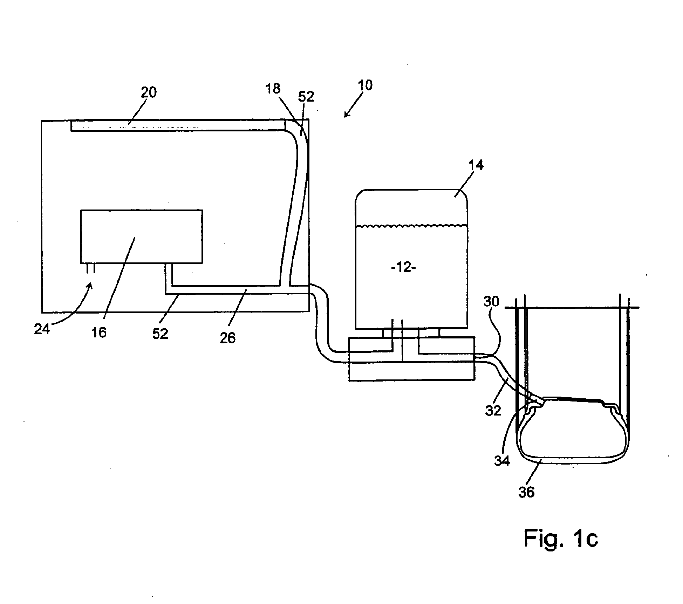

Figur 1c zeigt eine alternative Ausführungsform eines erfindungsgemäßen Reifenpannenhilfesets 10, das einen vom Kompressor 16 lösbaren Abdichtmittelbehälter 14 umfasst. Der Kompressor 16 wird über einen Schlauch mit dem Abdichtmittelbehälter 14 verbunden. Der Abdichtmittelbehälter 14 wird entweder durch Benutzerbetätigung (beispielsweise durch Aufschrauben) oder durch die Druckluft 52 des Kompressors 16 mittels eines nicht eingezeichneten pneumatischen Ventils mit dem Druckschlauch 32 verbunden. Der Abdichtmittelbehälter 14 besitzt einen Kompressoranschluss zum Anschließen an den Kompressor 16, der wie das Reifenventil 34 ausgebildet ist, so dass der Kompressor 16 auch direkt mit dem Reifen 36 verbunden werden kann. So ist eine Druckanpassung im Reifen 36 möglich, ohne Abdichtmittel 12 in den Reifen 36 einzubringen.

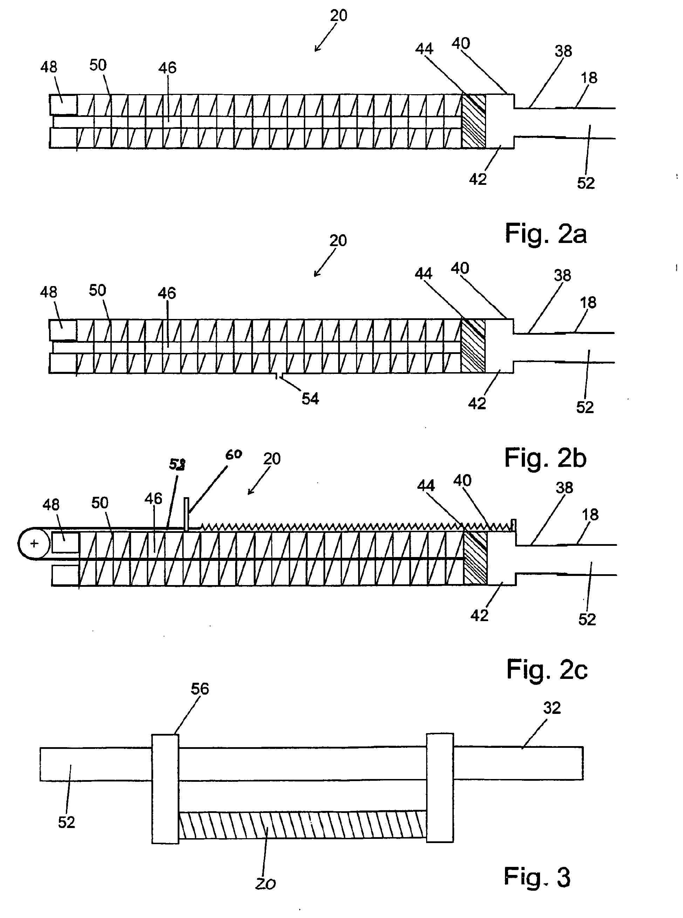

Figur 2a zeigt eine schematische Ansicht des Kolbenmanometers 20, das an einem Anschluss 38 mit dem Schlauch 18 in Messkontakt steht. Das Kolbenmanometer 20 umfasst ein aus Kunststoff oder Metall gefertigtes zylindrisches Manometergehäuse 40, dessen Innenraum einen Zylinder 42 darstellt, in dem ein Kolben 44 längsbeweglich gelagert ist. An dem beispielsweise aus einem Elastomer hergestellten Kolben 44 ist eine Messzunge 46 angeklippst oder mit diesem fest verbunden, die an ihrem dem Kolben 44 abgewandten Ende durch einen Führungszylinder 48 gelagert ist. Die Messzunge 46 kann aus dem Manometergehäuse 40 durch den Führungszylinder 48 austreten. Die Form der Messzunge 46 kann beispielsweise eckig, flach als auch rund oder oval sein.

Der Kolben 44 wird über eine Spiralfeder 50 in eine in Figur 2 gezeigte Nulllage vorgespannt. Tritt durch den Schlauch 18 Druckluft 52 in das Kolbenmanometer 20 ein, so bewegt diese den Kolben 44 entgegen der Federkraft der Spiralfeder 50 in eine Auslenkstellung. Die Stellung des Kolbens 44 ist damit ein Maß für einen Luftdruck p der Druckluft 52.

Figur 2b zeigt eine alternative Ausführungsform eines Kolbenmanometers 20, das ein Loch 54 im Manometergehäuse 40 besitzt. Wenn sich der Kolben 44 entgegen der Federkraft der Spiralfeder 50 in eine Auslenkstellung bewegt, wird jenseits des Kolbens 44 in dem Manometergehäuse 40 befindliche Luft durch ein Loch 54 aus dem Manometergehäuse 40 ausgetrieben.

Die Auslenkung des Kolbens 44, bei der der Kolben 44 unmittelbar benachbart zu dem Loch 54 positioniert ist, entspricht einem Maximaldruck pₘₐₓ. Wird der Maximaldruck pₘₐₓ überschritten, so entweicht die Druckluft 52 durch das Loch 54, so dass sichergestellt ist, dass der Maximaldruck pₘₐₓ in dem Kolbenmanometer 20 im Wesentlichen nicht überschritten wird. Da das Kolbenmanometer 20 in Verbindung mit allen abströmseitigen Komponenten des Reifenpannenhilfesets steht, wird so auch sichergestellt, dass an keiner Stelle ein Luftdruck p herrschen kann, der deutlich oberhalb des Maximaldrucks pₘₐₓ liegt. Durch Herausziehen der Messzunge 46 kann zudem gezielt Druckluft abgelassen werden.

Bei zunehmendem Luftdruck p bewegt sich, wie oben beschrieben, der Kolben 44 aus seiner in Figur 2 gezeigten Ruhelage in eine Auslenklage, in der die Messzunge 46 aus dem Manometergehäuse 40 hinausragt. Die Messzunge 46 weist eine aufgedruckte Druckskala auf, auf der der in dem Kolbenmanometer 20 herrschende Luftdruck p abgelesen werden kann. Alternativ dazu weist die Messzunge in ihrer Längserstreckung zwei oder mehr unterschiedlich farbige Bereiche auf. Die farbigen Bereiche sind so gewählt, dass dann, wenn ein erster Bereich aus dem Manometergehäuse 40 ragt, der Luftdruck p zu niedrig ist, um den Reifen zu benutzen, Ragt ein zweiter (beispielsweise grüner) Bereich aus dem Manometergehäuse 40, so ist der Reifen benutzbar. Ragt ein weiterer Bereich aus dem Manometergehäuse 40, so ist der Luftdruck p zu hoch. Ein solcher dritter Bereich ist überflüssig, wenn das Loch 54 vorhanden ist.

Alternativ zu der Spiralfeder 50 kann ein Gasvolumen vorgesehen sein, das als Feder fungiert. In diesem Fall ist entweder das Manometergehäuse 40 so lang ausgelegt, dass die Messzunge 46 das Manometergehäuse 40 nicht verlassen muss oder der Führungszylinder 48 ist gasdicht zur Messzunge 46 abgedichtet.

In einer weiteren alternativen Ausführungsform ist die Messzunge aus flexiblem Material hergestellt und enthält eine Verzahnung, die mit einer Verzahnung einer Drehkappe des Kolbenmanometers kämmt. Wenn der Kolben 44 sich bewegt, dreht sich die Drehkappe relativ zu dem Manometergehäuse 40 und zeigt mittels einer auf der Außenseite vorhandenen Skala den anliegenden Druck an.

Alternativ können die Messzunge 46 und der Kolben 44 über Magneten gekoppelt sein. Es ist zudem möglich, einen Zeiger außerhalb des Manometergehäuses 40 magnetisch mit dem Kolben zu koppeln.

Figur 3 zeigt eine alternative Ausführungsform für die Anordnung des Kolbenmanometers 20. Über einen Adapter 56 ist das Kolbenmanometer 20 in Messkontakt mit dem Druckschlauch 32 und misst den Luftdruck p der in dem Druckschlauch 32 vorhandenen Druckluft 52.

Ein erfindungsgemäßes Verfahren wird dadurch durchgeführt, dass zunächst der Abdichtmittelbehälter 14 (Figur 1a) mit der Druckluftquelle 16 in Form des Kompressors und dem Reifenventil 34 verbunden wird. Sofern, wie im vorliegenden Fall, die Druckluftquelle 16 bereits mit Abdichtmittelbehälter 14 verbunden ist, ist dieser Schritt ohne weiteres Tätigwerden abgearbeitet. Anschließend wird die Druckluftquelle 16 betrieben, so dass sie Druckluft 52 in den Abdichtmittelbehälter 14 einbringt und so Abdichtmittel 14 durch den Auslass 30 und den Druckschlauch 32 in den Reifen 36 einbringt. Anschließend wird der Druckschlauch 32 von dem Reifenventil 34 gelöst und mittels eines separaten Kolbenmanometers 20 wird der Luftdruck in dem Reifen 36 gemessen. Liegt der Luftdruck p in einem vorgegebenen akzeptierten Luftdruckintervall, so ist der Reifen 36 repariert und die Fahrt mit einem Personen- oder Nutzkraftwagen, an dem der Reifen 36 befestigt ist, kann angetreten werden.

Zum Messen des Luftdrucks p in dem Reifen 36 wird ein Kolbenmanometer 20 eingesetzt, das einen Adapter besitzt, der ein Anschließen ausschließlich an das Reifenventil 34, nicht aber beispielsweise an den Auslass 30 oder einen sonstigen Auslass einer Komponente des Reifenpannenhilfesets erlaubt.

Das Manometergehäuse 40 (Figur 2) des Kolbenmanometers 20 ist in einer Ausführungsform teilweise transparent ausgeführt. Außen auf dem Manometergehäuse 40 ist eine Druckskala angebracht. Der Kolben 44 dient dann zugleich der Anzeige des Luftdrucks p. Es ist möglich, dass die Druckskala den Luftdruck p direkt in einer Druckeinheit (mbar, psi) angibt oder eine oben beschriebene Farbkodierung besitzt.

Figur 2c zeigt eine alternative Ausführungsform, bei der das Kolbenmanometer 20 ein Anzeigeelement 60 azfweustm wekcges röznkucg getrennt vom Manometer angebracht werden kann. Das Seil 58 ist mit einem ersten Ende am Kolben 44 befestigt. Ein dem ersten Ende abgewandtes zweites Ende wird über eine oder mehrere Umlenkvorrichtung(en), wie beispielsweise Rollen, in eine beliebige Richtung umgelenkt und zu einem Zeiger 60 geführt, der in einer nicht gezeichneten Führung unterhalb einer Druckskala läuft. Um das Seil 58 straff zu halten, ist der Zeiger 60, beispielsweise über ein weiteres Seil, mit einer weichen Feder verbunden, die wiederum mit dem Manometergehäuse 40 verbunden ist. Solche Seilführungen sind beispielsweise aus Radios mit Einstellkondensator bekannt. Der Vorteil ist, dass der Zeiger 60 und die übrigen Bestandteile des Kobenmanometers 20 räumlich voneinander getrennt werden können.

Der Kompressor 16 kann eine elektrische Steuerung umfassen, die ihn nach einer vorgegebenen Betriebszeit automatisch abschaltet. Dadurch wird vermieden, dass ein Benutzer mit dem Reifenpannenhilfeset Reifenschäden zu beheben versucht, für dies es nicht ausgelegt ist. Nach einem so verursachten Abschalten wird beispielsweise mittels LED-Anzeige eine Fehlermeldung angezeigt.

Ganz allgemein ist die Verwendung des Kolbenmanometers 20 in dem Reifenpannenhilfeset 10 erfindungsgemäß. Beispielsweise ist das Kolbenmanometer 20 in einer Aufnahme des Kompressorgehäuses 22 lösbar angeordnet, beispielsweise angeklippst. Alternativ oder additiv ist das Kolbenmanometer 20 zum Anklippsen an ein Kabel oder einen Druckschlauch des Reifenpannenhilfesets 10 ausgebildet oder anderweitig dort gelagert, zum Beispiel in einer Einsteckhülse, mittels Klettverschluss, etc...

Um das Kolbenmanometer 20 leicht ablesbar zu machen, ist die Messzunge 46 nicht mit dem Kolben 44 verbunden und der Führungszylinder 48 liegt eng an ihr an, so dass bei einem Abkoppeln des Kolbenmanometers 20 vom Reifen 36 die Messzunge an ihrer Stelle verbleibt und der Luftdruck p kann leicht abgelesen werden.

Das Kolbenmanometer 20 kann zudem eine Ablassvorrichtung zum Ablassen von Druckluft umfassen und hat eine Länge zwischen 20 mm und 200 mm, insbesondere 80 mm und 130 mm, und einen Durchmesser zwischen 3 mm und 25 mm, insbesondere zwischen 8 mm und 11 mm. Es ist zudem günstig, das Kolbenmanometer 20 mit einer Beleuchtung oder mit nachleuchtendem Material zu versehen, so dass eine Benutzung in Dunkelheit erleichtert ist.

Gemäß einer alternativen Ausführungsform wird im Rahmen eines erfindungsgemäßen Verfahrens zunächst der Abdichtmittelbehälter 14 mit dem Reifen 36 verbunden und das Abdichtmittel 12 per Hand in den Reifen 36 gebracht (sog. Quetschlösung). Anschließend wird mittels des Kompressors 16 der Reifen 36 aufgeblasen und danach oder simultan wird der Luftdruck p unter Verwendung des Kolbenmanometers gemessen.

### Bezugszeichenliste

### (Teil der Beschreibung)

- 10: Reifenpannenhilfeset et
- 12: Abdichtmittel
- 14: Abdichtmittelbehälter
- 16: Druckluftquelle, Kompressor
- 18: Schlauch

- 20: Kolbenmanometer
- 22: Kompressorgehäuse
- 24: Lufteinlass
- 26: Druckleitung
- 28: 3-Wege-Ventil

- 30: Auslass
- 32: Druckschlauch
- 34: Reifenventil
- 36: Reifen
- 38: Anschluss

- 40: Manometergehäuse
- 42: Zylinder
- 44: Kolben
- 46: Messzunge
- 48: Führungszylinder

- 50: Spiralfeder
- 52: Druckluft
- 54: Loch
- 56: Adapter

- 58: Seil
- 60: Zeiger

- p: Luftdruck
- pₘₐₓ: Maximaldruck

## Patentansprüche

1. Reifenpannenhilfeset, insbesondere für Personen- oder Nutzkraftwagen, mit
(a) einem ein Abdichtmittel (12) enthaltenden Abdichtmittelbehälter (14),
(b) einer Druckluftquelle (16) und
(c) einem Manometer (20), wobei
(d) das Manometer ein Kolbenmanometer (20) ist, das einen in einem Zylinder (42) laufenden Kolben (44) umfasst und die Druckluftquelle ein mit einem elektrischen Bordnetz des Personen- oder Nutzkraftwagens betreibbarer Kompressor (16) ist, der zum Verbinden mit dem Abdichtmittelbehälter (14) ausgebildet ist,
**dadurch gekennzeichnet, dass** das Kolbenmanometer (20) gesondert mit einem Reifenventil (34) eines Reifens (36) des Personen- oder Nutzkraftwagen in Messkontakt bringbar und in einer Aufnahme des Kompressorgehäuses (22) lösbar angeordnet ist.

2. Reifenpannenhilfeset nach Anspruch 1, **dadurch gekennzeichnet, dass** das Kolbenmanometer (20) eine Messzunge (46) besitzt, die in Abhängigkeit von dem am Kolbenmanometer (20) anliegenden Luftdruck (p) aus einem Manometergehäuse (40) des Kolbenmanometers (20) hinaus ragt.

3. Reifenpannenhilfeset nach Anspruch 2, **dadurch gekennzeichnet, dass** die Messzunge (46) ausgebildet ist, um einen Maximaldruckschalter zu betätigen.

4. Reifenpannenhilfeset nach Ansprüche 2 bis 3, **dadurch gekennzeichnet, dass** die Messzunge (46) nur bezüglich einer Bewegungsrichtung mit dem Kolben (44) gekoppelt ist, so dass sich ihre Position relativ zu einer Druckskala auf der Messzunge (46) oder dem Manometergehäuse (40) bei einem Absinken des Luftdrucks (p) nicht ändert.

5. Reifenpannenhilfeset nach einem der vorstehenden Ansprüche, **dadurch gekennzeichnet, dass** das Kolbenmanometer (20) ein transparentes Manometergehäuse (40) mit Druckskala aufweist, so dass über die Stellung des Kolbens (44) in einem Inneren des Kolbenmanometers (20) der Luftdruck (p) abgelesen werden kann.

6. Reifenpannenhilfeset nach einem der vorstehenden Ansprüche, **dadurch gekennzeichnet, dass** das Kolbenmanometer (20) eine von dem Kolben (44) bewegbare Flüssigkeitssäule aufweist, die auf eine Druckanzeigevorrichtung wirkt.

7. Reifenpannenhilfeset nach einem der vorstehenden Ansprüche, **dadurch gekennzeichnet, dass** das Kolbenmanometer (20) ein dem Luftdruck (p) der Druckluft (52) entgegen wirkendes Gasvolumen umfasst.

8. Reifenpannenhilfeset nach einem der vorstehenden Ansprüche, **dadurch gekennzeichnet, dass** das Kolbenmanometer (20) einen an dem Manometergehäuse (40) angeordneten Zeiger aufweist, der über ein Seil mit dem Kolben verbunden ist.

9. Reifenpannenhilfeset nach einem der vorstehenden Ansprüche, **dadurch gekennzeichnet, dass** das Kolbenmanometer (20) eine farblich kodierte, insbesondere binäre Druckanzeige umfasst.

10. Reifenpannenhilfeset nach einem der vorstehenden Ansprüche, **dadurch gekennzeichnet, dass** das Manometergehäuse (20) ein Loch (54) aufweist, das so angeordnet ist, dass Druckluft (52) aus dem Loch (54) in die Umgebung entweicht, wenn der Luftdruck (p) einen voreingestellten Wert (pₘₐₓ) überschreitet.

11. Reifenpannenhilfeset nach einem der vorstehenden Ansprüche, **dadurch gekennzeichnet, dass** es als Druckmesser ausschließlich das Kolbenmanometer (20) umfasst und das Kolbenmanometer (20) ausschließlich mit dem Reifenventil (34) des Reifens (36) in Messkontakt bringbar ist.

12. Reifenpannenhilfeset nach einem der vorstehenden Ansprüche, **dadurch gekennzeichnet, dass** in das Kolbenmanometer (20) ein Ventilausdreher integriert ist.

13. Verfahren zum Beheben eines Schadens an einem Reifen, mit den Schritten:
(a) Bereitstellen eines Reifenpannenhilfesets (10) nach einem der vorstehenden Ansprüche,
(b) Einbringen von Abdichtmittel (12) aus dem Abdichtmittelbehälter (14) in den Reifen (36) und anschließend
(c) Kontrollieren eines Luftdrucks (p) in dem Reifen (36) mittels des Kolbenmanometers, **dadurch gekennzeichnet, dass**
- der Luftdruck (p) ausschließlich dann kontrolliert wird, wenn der Kompressor (16) außer Betrieb ist.

## Claims

1. Flat tyre repair kit, in particular for passenger vehicles or utility vehicles, having
(a) a sealing medium container (14) which contains a sealing medium (12),
(b) a compressed air source (16), and
(c) a manometer (20), wherein
(d) the manometer is a piston manometer (20) which comprises a piston (44) which moves in a cylinder (42), and the compressed air source is a compressor (16) which can be operated with an on-board electrical system of the passenger vehicle or utility vehicle and is designed for connection to the sealing medium container (14),
**characterized in that** the piston manometer (20) can be separately placed in measuring contact with a tyre valve (34) of a tyre (36) of the passenger vehicle or utility vehicle and can be detachably arranged in a receptacle of the compressor housing (22).

2. Flat tyre repair kit according to Claim 1, **characterized in that** the piston manometer (20) has a measuring tongue (46) which projects out of a manometer housing (40) of the piston manometer (20) as a function of the air pressure (p) applied to the piston manometer (20).

3. Flat tyre repair kit according to Claim 2, **characterized in that** the measuring tongue (46) is designed to activate a maximum pressure switch.

4. Flat tyre repair kit according to Claims 2 to 3, **characterized in that** the measuring tongue (46) is coupled to the piston (44) with respect to just one movement direction, with the result that the position of said measuring tongue (46) in relation to a pressure scale on the measuring tongue (46) or the manometer housing (40) does not change when the air pressure (p) drops.

5. Flat tyre repair kit according to one of the preceding claims, **characterized in that** the piston manometer (20) has a transparent manometer housing (40) with a pressure scale, with the result that the air pressure (p) can be read off by means of the position of the piston (44) in an interior space of the piston manometer (20).

6. Flat tyre repair kit according to one of the preceding claims, **characterized in that** the piston manometer (20) has a liquid column which can be moved by the piston (44) and which acts on a pressure display device.

7. Flat tyre repair kit according to one of the preceding claims, **characterized in that** the piston manometer (20) comprises a gas volume which counteracts the air pressure (3p) of the compressed air (52).

8. Flat tyre repair kit according to one of the preceding claims, **characterized in that** the piston manometer (20) has a pointer which is arranged on the manometer housing (40) and which is connected to the piston via a cable.

9. Flat tyre repair kit according to one of the preceding claims, **characterized in that** the piston manometer (20) comprises a colour-coded, in particular binary, pressure display.

10. Flat tyre repair kit according to one of the preceding claims, **characterized in that** the manometer housing (40) has a hole (54) which is arranged in such a way that compressed air (52) escapes from the hole (54) into the surroundings if the air pressure (p) exceeds a preset value (pₘₐₓ).

11. Flat tyre repair kit according to one of the preceding claims, **characterized in that** said flat tyre repair kit exclusively comprises the piston manometer (20) as a pressure meter, and the piston manometer (20) can be exclusively placed in measuring contact with the tyre valve (34) of the tyre (36).

12. Flat tyre repair kit according to one of the preceding claims, **characterized in that** a valve extractor is integrated into the piston manometer (20).

13. Method for treating damage to a tyre, having the steps:
(a) provision of a flat tyre repair kit (10) according to one of the preceding claims,
(b) introduction of sealing medium (12) from the sealing medium container (14) of the tyre (36) and subsequent
(c) checking of an air pressure (p) in the tyre (36) by means of the piston manometer, **characterized in that**
- the air pressure (p) is checked only when the compressor (16) is out of operation.

## Revendications

1. Trousse de réparation de pneus crevés, en particulier pour voitures automobiles ou véhicules utilitaires, et présentant
(a) un récipient (14) d'agent d'étanchéité qui contient un agent d'étanchéité (12),
(b) une source (16) d'air comprimé et
(c) un manomètre (20),
(d) le manomètre étant un manomètre (20) à piston qui comporte un piston (44) qui se déplace dans un cylindre (42) et la source d'air comprimé étant un compresseur (16) qui peut être alimenté par le réseau électrique de bord de la voiture automobile ou du véhicule utilitaire et configuré pour être relié au récipient (14) d'agent d'étanchéité,
**caractérisée en ce que**
le manomètre (20) à piston peut être mis séparément en contact de mesure avec la soupape (34) d'un pneu (36) de la voiture automobile ou du véhicule utilitaire et est disposé de manière libérable dans un logement du boîtier (22) du compresseur.

2. Trousse de réparation de pneus crevés selon la revendication 1, **caractérisée en ce que** le manomètre (20) à piston possède une languette de mesure (46) qui déborde hors d'un boîtier (40) du manomètre (20) à piston en fonction de la pression d'air (p) appliquée sur le manomètre (20) à piston.

3. Trousse de réparation de pneus crevés selon la revendication 2, **caractérisée en ce que** la languette de mesure (46) est configurée pour actionner un commutateur de pression maximale.

4. Trousse de réparation de pneus crevés selon les revendications 2 et 3, **caractérisée en ce que** la languette de mesure (46) n'est couplée au piston (44) que dans une direction de déplacement de telle sorte que sa position par rapport à une échelle de pression prévue sur la languette de mesure (46) ou sur le boîtier (40) du manomètre ne se modifie pas lorsque la pression d'air (p) s'abaisse.

5. Trousse de réparation de pneus crevés selon l'une des revendications précédentes, **caractérisée en ce que** le manomètre (20) à piston présente un boîtier (40) transparent doté d'une échelle de mesure de sorte que la pression d'air (p) peut être lue par l'intermédiaire de la position du piston (44) à l'intérieur du manomètre (20) à piston.

6. Trousse de réparation de pneus crevés selon l'une des revendications précédentes, **caractérisée en ce que** le manomètre (20) à piston présente une colonne de liquide qui peut être déplacée par le piston (44) et sur laquelle agit un dispositif d'affichage de pression.

7. Trousse de réparation de pneus crevés selon l'une des revendications précédentes, **caractérisée en ce que** le manomètre (20) à piston comporte un volume de gaz qui agit en opposition à la pression (p) de l'air comprimé (52).

8. Trousse de réparation de pneus crevés selon l'une des revendications précédentes, **caractérisée en ce que** le manomètre (20) à piston présente un afficheur disposé sur le boîtier (40) du manomètre et relié au piston par l'intermédiaire d'un câble.

9. Trousse de réparation de pneus crevés selon l'une des revendications précédentes, **caractérisée en ce que** le manomètre (20) à piston comporte un affichage de pression codé en couleur et en particulier binaire.

10. Trousse de réparation de pneus crevés selon l'une des revendications précédentes, **caractérisée en ce que** le boîtier (40) du manomètre présente un trou (54) disposé de telle sorte que l'air comprimé (52) s'échappe dans l'environnement par le trou (54) lorsque la pression d'air (p) dépasse une valeur (pₘₐₓ) préréglée.

11. Trousse de réparation de pneus crevés selon l'une des revendications précédentes, **caractérisée en ce qu'**elle comprend comme dispositif de mesure de pression uniquement le manomètre (20) à piston et **en ce que** le manomètre (20) à piston peut être mis en contact de mesure uniquement avec la soupape (34) du pneu (36).

12. Trousse de réparation de pneus crevés selon l'une des revendications précédentes, **caractérisée en ce qu'**un dispositif de dévissage de soupape est intégré dans le manomètre (20) à piston.

13. Procédé de réparation d'un pneu endommagé, le procédé présentant les étapes qui consistent à :
(a) prévoir une trousse (10) de réparation de pneus crevés selon l'une des revendications précédentes,
(b) apporter dans le pneu (36) de l'agent d'étanchéité (12) provenant du récipient (14) à agent d'étanchéité et ensuite
(c) contrôler la pression d'air (p) qui règne dans le pneu (36) au moyen du manomètre à piston,
**caractérisé en ce que**
la pression d'air (p) est contrôlée uniquement lorsque le compresseur (16) ne fonctionne pas.
